Europäisches Patentamt

**European Patent Office**

**Office européen des brevets**

(19)

(11) Numéro de publication: **0 148 678**
A1

(12) # DEMANDE DE BREVET EUROPEEN

(21) Numéro de dépôt: **84402591.6**

(22) Date de dépôt: **14.12.84**

(51) Int. Cl.⁴: **B 01 J 21/06,** C 10 G 47/04, C 10 C 1/20

(30) Priorité: **22.12.83 FR 8320562**

(43) Date de publication de la demande: **17.07.85 Bulletin 85/29**

(84) Etats contractants désignés: **AT BE CH DE FR GB IT LI LU NL SE**

(71) Demandeur: **Etablissement public dit: CHARBONNAGES DE FRANCE, 9, Avenue Percier, F-75008 Paris (FR)**

(72) Inventeur: **Pregermain, Simone, 112 Avenue de Suffren, F-75015 Paris (FR)**
Inventeur: **Kiers, Jean Alfred, 42 Rue René Firmin, F-60700 Pont-Ste-Maxence (FR)**

(74) Mandataire: **Dubost, Thierry, SOCIETE CHIMIQUE DES CHARBONNAGES Service Propriété Industrielle B.P. 57, F-62670 Mazingarbe (FR)**

(54) Procédé et catalyseur pour le traitement de coupes lourdes d'hydrogénats provenant de l'hydroliquéfaction du charbon.

(57) L'invention concerne un procédé et un catalyseur de traitement de coupes lourdes d'hydrogénats provenant de l'hydroliquéfaction du charbon.

Les coupes lourdes sont soumises à l'hydrogénolyse à une température comprise entre 600°C et 850°C et sous une pression d'hydrogène comprise entre 10 et 120 bars, en présence d'au moins un catalyseur comprenant de l'oxyde de zirconium.

Application à la valorisation du charbon.

EP 0 148 678 A1

ACTORUM AG

1

La présente invention concerne un procédé et un catalyseur pour le traitement de coupes lourdes d'hydrogénats provenant de l'hydroliquéfaction du charbon.

Les hydrogénats provenant des installations d'hydroliquéfaction du charbon en phase liquide sont des mélanges complexes qui présentent une certaine analogie avec les bruts pétroliers mais s'en différencient par un certain nombre de propriétés :
- densité et rapport C/H plus élevés, dûs à une aromaticité plus grande,
- teneur en soufre moins élevée mais teneurs en azote et en oxygène beaucoup plus élevées,
- proportion de produits lourds (de température d'ébullition supérieure à 325°C) généralement moins élevée.

Une voie envisageable pour la valorisation de ces hydrogénats consiste en la préparation de matières premières pour l'industrie chimique : benzène, toluène, xylènes, naphtalène, phénols, etc...

L'article de A. KOROSI, H.N. WOEBCKE et P.S. VIRK publié dans American Chemical Society, 1976, 21 (6), 190-197 a montré que les molécules aromatiques polynucléaires présentes dans les liquides issus du charbon doivent être complètement hydrogénées, c'est-à-dire complètement transformées en naphtènes, pour fournir des produits valorisables. Les produits hydroaromatiques pyrolysés tendent à redonner les produits aromatiques correspondants qui à leur tour donnent lieu à des réactions de polymérisation. Cette étude soulève le problème de mise au point d'un catalyseur insensible aux effets stériques provoqués par des substitutions multiples à la périphérie du noyau aromatique, le dernier noyau aromatique restant est le plus difficile à hydrogéner.

L'article de U. GRAESER et A. JANKOWSKI publié dans Erdöl und Kohle, 1982, 35, 74-77 décrit un schéma de traitement des hydrogénats provenant de l'hydroliquéfaction du charbon, selon lequel le produit initial subit d'abord un fractionnement par distillation tandis que les différentes fractions obtenues sont traitées indépendamment les unes des autres :
- après extraction des phénols et des bases, l'huile légère subit un raffinage et un reformage,
- les huiles moyenne et lourde peuvent subir un raffinage et un hydrocraquage.

Dans les deux cas le raffinage a pour but d'éliminer les hétéroatomes gênants pour les opérations ultérieures car ils empoisonnent les catalyseurs. Les conditions nécessaires pour effectuer cette opération sont plus sévères que pour les coupes pétrolières d'intervalle d'ébullition comparable car les concentrations en oxygène et en azote sont plus élevées.

Le raffinage de l'huile légère s'effectue en phase gazeuse en deux étapes, le catalyseur de la première étape (à base d'oxydes de cobalt et molybdène) étant différent de celui de la seconde étape (à base d'oxydes de nickel et molybdène). La température est comprise entre 360 et 390°C et la pression est de 100 bars. Le reformage se fait en utilisant un catalyseur au platine, une température de 420°C, une pression de 15 bars. Avec une teneur en aromatiques de 82 %, ce reformat représente une matière première excellente pour la production de BTX et d'éthylbenzène.

Le raffinage et l'hydrotraitement de l'huile moyenne, laquelle constitue la partie la plus importante (70 %) des hydrogénats provenant de l'hydroliquéfaction du charbon, s'effectuent en une seule étape en utilisant des catalyseurs à base d'oxydes de nickel, de molybdène et de tungstène.

Deux types de traitements ont été étudiés :
- un traitement "doux" (100 bars, 390°C) fournit un produit débarrassé des hétéroatomes mais très dense et riche en aromatiques (peu hydrogéné par rapport au produit de départ),
- un traitement "sévère" (280 bars, 410°C) fournit un produit très hydrogéné et riche en naphtènes, utilisable comme jet-fuel.

L'article de W.A. HILLEBRAND, K.G. LIPHARD, B. STROBEL, N. HODEK et G. KOLLING publié dans Erdöl und Kohle, 1981, 34, 443-446 concerne le traitement hydrogénant de l'huile moyenne afin d'obtenir des produits susceptibles d'être utilisés dans un vapocraqueur pour donner de l'éthylène et la coupe BTX. Ce traitement comporte deux étapes :
- raffinage en autoclave à 400°C sous 200 bars à l'aide d'un catalyseur Ni-W insensible au soufre. On obtient une saturation de 20 % des aromatiques.
- hydrogénation également en autoclave à des températures variables entre 210 et 300°C sous une pression de 50 à 150 bars avec un catalyseur au nickel très actif mais sensible au soufre. On obtient des produits ne présentant qu'un noyau aromatique dans une structure polycyclique. La saturation complète des aromatiques demanderait un traitement encore plus sévère.

L'article de T. JACOBSEN et E. GALLEI publié dans Erdöl und Kohle, 1981, 34, 447-450 décrit un schéma de traitement des hydrogénats selon lequel, contrairement à ce qui précède, on effectue le raffinage sur l'ensemble du produit avant le fractionnement par distillation et on donne une grande importance à l'hydrocraquage de l'huile moyenne.

Le raffinage s'effectue à une température de 390-450°C, sous une pression de 200 à 300 bars avec un catalyseur Ni-Mo sur un support d'alumine contenant de la silice.

3

Le fractionnement qui succède au raffinage permet de séparer :

- les produits légers qui ne subiront pas d'autres traitements (pentanes, isohexanes),

- une fraction dont la température d'ébullition est inférieure à 175°C, destinée au reformage (après lequel la température d'ébullition restera inférieure à 210°C, limite pour le supercarburant),

- une fraction dont la température d'ébullition est supérieure à 175°C, destinée à l'hydrocraquage.

L'hydrocraquage s'effectue à une température de 200 à 300°C, une pression de 150 à 250 bars, avec un catalyseur à base de métal noble sur zéolithe. Après distillation on obtient une fraction très importante de température de distillation comprise entre 70 et 175°C, qui est envoyée au reformage en même temps que la fraction correspondante provenant du raffinage de l'huile globale.

Le reformage se fait à une température de 480 à 520°C, une pression de 10 à 20 bars, à l'aide d'un catalyseur Pt-Re sur support. Le supercarburant obtenu à l'issue de l'étape de reformage est rendu conforme aux normes légales en éliminant le surplus de benzène par distillation ou extraction.

Le même schéma de traitement des hydrogénats s'applique à la production de la coupe BTX sous réserve de prévoir une installation de désalkylation des aromatiques alkylés en $C_3$ et plus, lesquels représentent environ 25 % du réformat.

Les articles publiés par G.O. DAVIES dans Chemistry and Industry, 1978, 15, 560-566 et par G.G. THURLOW dans Chemical Engineering Progress, 1980, 76, 81-84 décrivent un schéma de traitement des hydrogénats provenant de l'hydroliquéfaction du charbon qui se différencie essentiellement des schémas précédents par l'importance donnée au craquage thermique permettant d'obtenir des oléfines légères et une coupe BTX à partir des distillats légers et moyens. Pour l'application de ce schéma au traitement des distillats moyens, les articles publiés par W.R. LADNER, J.O.H. NEWMAN et P.W. SAGE dans Journal of the Institute of Energy 1980, 76-84 et dans American Chemical Society, 1980, 25(1), 188-198 montrent qu'il est nécessaire d'hydrogéner complètement les molécules aromatiques polynucléaires présentes dans les liquides issus du charbon, afin de les rendre aptes à donner des rendements convenables en éthylène et BTX au cours du craquage thermique. Le procédé consiste à injecter la charge à traiter dans un courant d'hydrogène préchauffé à une température d'au moins 900°C, sous une pression allant jusqu'à 44 bars et avec un temps de séjour de 0,01 à 2 secondes.

4

L'article publié par M. TANIEWSKI et Coll. dans Industrial and Engineering Chemistry, Prod. Res. Dev. 1981, 20, 746-752 suggère une modification du schéma précédent, consistant à remplacer la pyrolyse dans l'azote par une pyrolyse dans l'hydrogène (hydropyrolyse). On constate en effet que l'hydrogène catalyse les réactions de décomposition des hydrocarbures présents dans les liquides issus du charbon et permet de les orienter de manière souhaitable : les oléfines supérieures se transforment en éthylène, les aromatiques subissent une hydrodésalkylation.

Cet exposé des travaux antérieurs montre que des résultats satisfaisants ont déjà été obtenus dans la valorisation des hydrogénats provenant de l'hydroliquéfaction du charbon en soumettant à un craquage thermique les coupes les plus légères de ces hydrogénats, en particulier celles ayant une température d'ébullition inférieure ou égale à 200°C, tandis que la valorisation des coupes les plus lourdes de ces hydrogénats constitue un problème non encore résolu de manière satisfaisante. Cette valorisation constitue donc un des objectifs de la présente invention.

Un premier objet de la présente invention concerne un procédé de traitement de coupes lourdes d'hydrogénats provenant de l'hydroliquéfaction du charbon, caractérisé en ce que lesdites coupes sont soumises à l'hydrogénolyse à une température comprise entre 600°C et 850°C et sous une pression d'hydrogène comprise entre 10 et 120 bars, en présence d'au moins un catalyseur comprenant de l'oxyde de zirconium. Le traitement s'effectue dans un réacteur résistant à la pression et, en règle générale, il est préférable que le temps de séjour des coupes à traiter dans ledit réacteur soit compris entre 1 et 30 secondes.

Par coupes lourdes pouvant être traitées conformément au procédé selon l'invention on entend des coupes dont la température d'ébullition est au moins égale à 250°C. Dans le cas des hydrogénats provenant de l'hydroliquéfaction du charbon, de telles coupes peuvent contenir des composés organiques tels que notamment le phénanthrène, l'hexahydrophénanthrène, l'octahydrophénanthrène (octanthrène), l'anthracène, le dihydroanthracène, l'octahydroanthracène (octracène), l'acénaphtène, le biphényle, le fluorène, le pyrène et le tétrahydropyrène. Ces coupes peuvent être subsidiairement caractérisées par un rapport atomique H/C compris entre 0,8 et 1,6.

Le procédé selon l'invention permet d'obtenir, après traitement, d'une part un produit liquide et d'autre part un gaz. Les résultats obtenus par ce procédé sont remarquables en ceci que le produit liquide obtenu après traitement représente au moins 30 % en poids de la coupe à traiter tandis que lorsqu'on effectue le traitement dans les mêmes conditions de température et pression mais en remplaçant le catalyseur à base d'oxyde de zirconium par un garnissage d'alumine, on convertit la totalité de la charge en gaz.

Il est important pour le procédé selon l'invention que le catalyseur utilisé contienne de l'oxyde de zirconium, de préférence à raison d'au moins 50 % par rapport au poids de catalyseur. Par contre le catalyseur utilisé n'est pas nécessairement constitué uniquement d'oxyde de zirconium et il peut par exemple comprendre également d'autres composés, en particulier d'autres oxydes, soit de façon notable soit à l'état de traces ou impuretés. Des oxydes qui pourront sans inconvénient être présents dans le catalyseur sont notamment ceux de silicium, fer, calcium, et hafnium. Ainsi en particulier le catalyseur utilisé peut être le silicate naturel dénommé zircon, celui-ci comprenant en théorie 67,1 % d'oxyde de zirconium et 32,9 % de silice. Il peut se présenter sous différentes formes, notamment de billes de diamètre compris entre 1 et 4 mm.

Un second objet de la présente invention concerne un catalyseur pour le traitement par l'hydrogène de coupes lourdes d'hydrogénats provenant de l'hydroliquéfaction du charbon, caractérisé en ce qu'il comprend de l'oxyde de zirconium. Plus précisément des catalyseurs selon l'invention sont ceux dont une description détaillée figure au paragraphe précédent.

Les exemples suivants ont pour but d'illustrer l'invention de manière non limitative.

EXEMPLES 1 à 5

On considère d'une part des billes de 2 mm de diamètre commercialisées par la Société Européenne des Produits Réfractaires sous la dénomination ER 120. Ces billes de catalyseur contiennent 30 % en poids de silice et 70 % en poids d'oxyde de zirconium.

On considère d'autre part trois coupes lourdes provenant de l'hydrogénation de substances considérées comme modèles et deux coupes lourdes provenant de l'hydroliquéfaction du charbon.

La coupe utilisée dans les exemples 1 et 2 est obtenue par hydrogénation de phénanthrène pur à 98 % commercialisé par la société ALDRICH. L'hydrogénation a été effectuée respectivement à 380°C (exemple 1) et 420°C (exemple 2). La coupe utilisée dans l'exemple 3 est obtenue par hydrogénation à 380°C d'huile d'anthracène. Dans les trois cas, l'hydrogénation est effectuée en réacteur autoclave pendant 3 heures sous une pression de 230 bars et en présence d'un catalyseur à base de nickel et molybdène. Les analyses de carbone et d'hydrogène d'une part, de chromatographie et spectrométrie de masse d'autre part permettent de caractériser plus précisément les les trois coupes ainsi obtenues.

Les coupes utilisées dans les exemples 4 et 5 ont été obtenues dans un pilote continu d'un débit de quelques kilogrammes de charbon à l'heure, à 450°C et sous 220 bars de pression totale, à partir d'un charbon flambant lorrain. La coupe utilisée dans l'exemple 4 venait du séparateur froid et avait été obtenue sur catalyseur nickel-molybdène. La coupe utilisée dans l'exemple 5 venait du séparateur chaud et avait été obtenue en utilisant comme catalyseur de la masse Lux.

La coupe de l'exemple 1 a un rapport atomique H/C égal à 1,41. Elle contient 52 % en poids d'octahydrophénanthrène, 40,5 % en poids de perhydrophénanthrène, 1,3 % en poids de tétrahydrophénanthrène et 6,2 % en poids de produits légers (ayant une température d'ébullition inférieure à 250°C).

La coupe de l'exemple 2 a un rapport atomique H/C égal à 1,59. Elle contient 72,8 % en poids de perhydrophénanthrène, 15,2 % en poids d'octahydrophénanthrène, 0,7 % en poids de tétrahydrophénanthrène et 11,3 % en poids de produits légers.

La coupe de l'exemple 3 a un rapport atomique H/C égal à 0,91. Elle contient 8,4 % en poids de phénanthrène non hydrogéné, 8,1 % en poids de fluorène, 7,7 % en poids de diphénylèneoxyde, 7,5 % en poids de dihydrophénanthrène, 7 % en poids d'acénaphtène, 5,6 % en poids de biphényle, 5,1 % en poids de tétrahydropyrène, 2,1 % en poids de tétrahydrophénanthrène et 7 % en poids de produits légers, le reste étant un mélange de produits lourds non identifiés.

La coupe de l'exemple 4 a un rapport atomique H/C égal à 1,50. Elle contient 40 % en poids de produits distillant à température inférieure à 200°C, (dont 3 % de benzène, 4 % de toluène, 2 % de naphtalène et 5 % de tétraline) et quelques pourcents de produits distillant entre 300 et 350°C.

La coupe de l'exemple 5 a un rapport atomique H/C de 1,22. Son intervalle d'ébullition est de 200 - 350°C.

On fait circuler dans un réacteur de volume 12,5 cm$^3$, garni des billes de catalyseur et maintenu à une température de 700°C sous une pression de 40 bars d'hydrogène, une coupe lourde telle que décrite ci-dessus et selon un débit tel que son temps de séjour dans le réacteur soit égal à 2,3 secondes. On recueille à la sortie du réacteur d'une part un gaz et d'autre part un produit liquide dont le rendement pondéral par rapport à la coupe traitée est indiqué dans le tableau ci-après. Le produit liquide résultant du traitement est analysé à son tour et les proportions pondérales de benzène, toluène et naphtalène dans ce liquide sont également indiquées

7

dans le tableau ci-après.

TABLEAU

| exemple | 1 | 2 | 3 | 4 | 5 |
|---|---|---|---|---|---|
| liquide | 54,8 | 38,5 | 85,0 | 50,0 | 61,1 |
| benzène | 17,0 | 36,9 | 20,9 | 37,0 | 15,5 |
| toluène | 16,8 | 22,5 | 12,8 | 20,7 | 12,1 |
| naphtalène | 27,8 | 17,7 | 16,5 | 17,5 | 30,0 |

## REVENDICATIONS

1. Procédé de traitement de coupes lourdes d'hydrogénats provenant de l'hydroliquéfaction du charbon, caractérisé en ce que lesdites coupes sont soumises à l'hydrogénolyse à une température comprise entre 600°C et 850°C et sous une pression d'hydrogène comprise entre 10 et 120 bars, en présence d'au moins un catalyseur comprenant de l'oxyde de zirconium.

2. Procédé de traitement selon la revendication 1, s'effectuant dans un réacteur résistant à la pression et caractérisé en ce que le temps de séjour des coupes à traiter dans ledit réacteur est compris entre 1 et 30 secondes.

3. Procédé de traitement selon l'une des revendications 1 et 2, caractérisé en ce que la coupe à traiter à une température d'ébullition d'au moins 250°C.

4. Procédé de traitement selon l'une des revendications 1 et 2, caractérisé en ce que la coupe à traiter comprend au moins un composé organique choisi parmi le phénanthrène, l'hexahydrophénanthrène, l'octahydrophénanthrène (octanthrène), l'anthracène, le dihydroanthracène, l'octahydroanthracène (octracène), l'acénaphtène, le biphényle, le fluorène, le pyrène et le tétrahydropyrène.

5. Procédé de traitement selon l'une des revendications 1 à 4, caractérisé en ce que le rapport atomique H/C de la coupe à traiter est compris entre 0,8 et 1,6.

6. Procédé de traitement selon l'une des revendications 1 à 5, caractérisé en ce que le produit liquide obtenu après traitement représente au moins 30 % en poids de la coupe à traiter, le reste du produit traité étant constitué de gaz.

7. Procédé de traitement selon l'une des revendications 1 à 6, caractérisé en ce que l'oxyde de zirconium représente au moins 50 % en poids du catalyseur.

8. Procédé de traitement selon l'une des revendications 1 à 7, caractérisé en ce le catalyseur comprend en outre au moins un autre oxyde choisi parmi ceux de silicium, fer, calcium et hafnium.

9. Procédé de traitement selon l'une des revendications 1 à 8, caractérisé en ce que le catalyseur comprend du silicate naturel de zirconium.

10. Procédé de traitement selon l'une des revendications 1 à 9, caractérisé en ce que le catalyseur se présente sous forme de billes de diamètre compris entre 1 et 4 mm.

11. Catalyseur de traitement par l'hydrogène de coupes lourdes d'hydrogénats provenant de l'hydroliquéfaction du charbon, caractérisé en ce qu'il comprend de l'oxyde de zirconium.

12. Catalyseur selon la revendication 11, caractérisé en ce que l'oxyde de zirconium représente au moins 50 % en poids du catalyseur.

13. Catalyseur selon l'une des revendications 11 et 12, caractérisé en ce qu'il comprend en outre au moins un autre oxyde choisi parmi ceux de silicium, fer, calcium et hafnium.

14. Catalyseur selon l'une des revendications 11 à 13, caractérisé en ce qu'il se présente sous forme de billes de diamètre compris entre 1 et 4 mm.

0148678

Office européen
des brevets

**RAPPORT DE RECHERCHE EUROPEENNE**

Numéro de la demande

EP 84 40 2591

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-2 356 978 (UNIVERSAL OIL)<br><br>* Page 1, colonne de gauche, lignes 12-21; page 2, colonne de gauche, lignes 49-59; page 3, colonne de gauche, lignes 24-26; revendications 1,2,6 * | 1-10, 13 | B 01 J 21/06<br>C 10 G 47/04<br>C 10 C 1/20 |
| X |  | 11,12, 14 |  |
|  | --- |  |  |
| A | GB-A-1 008 756 (COAL TAR RESEARCH)<br>* Page 1, lignes 13-30; page 2, lignes 4-9, 15-25; page 6, lignes 63-71; tableau 1; revendication 1 * | 1-4,6 |  |
|  | --- |  | DOMAINES TECHNIQUES RECHERCHES (Int. Cl.4) |
| A,D | ERDÖL UND KOHLE, vol. 35, no. 2, février 1982, pages 74-77; U. GRAESER et al.: "Weiterverarbeitung von Kohleöl zu marktgängigen Produkten"<br>* Pages 76,77, paragraphe 4.2; tableau V * | 1,5 | B 01 J<br>C 10 G<br>C 10 C |
|  | --- |  |  |
| A | DE-C- 752 698 (I.G. FARBENINDUSTRIE)<br>* Page 2, lignes 81-87; revendication 1 * | 1,8,13 |  |
|  | ----- |  |  |

Le présent rapport de recherche a été établi pour toutes les revendications

| Lieu de la recherche<br>LA HAYE | Date d'achèvement de la recherche<br>07-05-1985 | Examinateur<br>SALA P.C. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82